# EUROPEAN PATENT APPLICATION

(11) **EP 3 591 018 A1**
(43) Date of publication of application: **08.01.2020**
(21) Application number: 18182239.6
(22) Date of filing: 06.07.2018
(51) Int. Cl.: C09J 101/02, C09J 103/00

(54) **MICROFIBRILLATED CELLULOSE FOR CONTROLLING VISCOSITY AND GEL TEMPERATURE IN STARCH-BASED ADHESIVES**

(71) Applicant: Borregaard AS, 1721 Sarpsborg (NO)
(72) Inventor: HOLTAN, Synnove, 1701 Sarpsborg (NO); LIAPIS, Katérina, 1701 Sarpsborg (NO); BERG, Jan, 1701 Sarpsborg (NO)
(74) Representative: Tostmann, Holger Carl

(57) **Abstract**

The present invention relates to starch-based adhesive compositions comprising microfibrillated cellulose ("MFC"). In addition to microfibrillated cellulose, these adhesive compositions comprise at least one starch and/or at least one starch derivative. The adhesive compositions have a reduced amount of caustic soda vis-à-vis adhesive compositions that do not comprise MFC as an additive. Borax or boric acid (or any derivative thereof) may be partially or fully replaced with microfibrillated cellulose, wherein MFC (contrary to borax) surprisingly does not significantly affect the gel temperature of the overall adhesive.

## Description

### FIELD OF THE INVENTION

The present invention generally relates to starch-based adhesive compositions comprising microfibrillated cellulose ("MFC"). In addition to microfibrillated cellulose, these adhesive compositions comprise at least one (native) starch and/or at least one starch derivative (modified starch).

The present invention also relates to a process for making MFC-modified starch (derivative)-based adhesives and to a process for making cardboard, as well as to cardboard comprising the starch-based adhesive composition.

The present invention generally relates to the use of MFC as a rheology modifying additive in adhesive compositions, in particular in adhesive compositions comprising at least one starch and/or at least one starch derivative. The use of these MFC-modified and starch-based adhesives in the manufacture of corrugated cardboards is particularly preferred.

In particular, the present invention relates to the use of MFC to control and/or stabilize the gel temperature in adhesive compositions, in particular in adhesive compositions comprising at least one starch and/or at least one starch derivative.

It has been surprisingly found that adding MFC to starch-based adhesive allows to lower the content of alkaline (in particular caustic soda) in the overall composition and to better control the gel temperature of the overall adhesive composition. The gel temperature is an important process parameter that needs to be controlled during application and curing of the starch-based adhesive.

The use of MFC-modified starch-based adhesives in (the manufacture of) corrugated cardboards is particularly preferred.

Furthermore, in preferred embodiments, the composition comprises no, or only trace amounts of boric acid or derivatives thereof, in particular no, or only trace amounts of borax.

In preferred embodiments, taken together, said traces amount to less than 1000 ppm, preferably less than 500 ppm, further preferably less than 200 ppm, further preferably less than 100 ppm.

Partly or completely replacing boric acid or any derivative, in particular borax, with MFC improves control over the important process parameter of gel temperature. Without wishing to be bound by theory, it is believed that if boric acid or its derivatives, in particular borax, is/are partially of completely removed from the starch based adhesive, essentially the only chemical parameter that significantly controls or affects the gel temperature is the amount of alkaline, for example the amount of caustic soda (NaOH). Therefore, in these preferred embodiments and under pre-set temperature, reaction time and mechanical shear rate in the mixing tank, the gel temperature can be controlled / adjusted by means of adjusting the alkaline content (only). If borax is present, borax reacts with the alkaline during processing, thus affecting the gel temperature. As will be shown in more detail below, MFC does not significantly react with the alkaline and therefore does not significantly affect the gel temperature during processing.

The present invention also relates to compositions, in particular compositions that have a gel temperature close to the gel temperature of the starch and/or at least one starch derivative, in which compositions the amount of hydroxide, in particular sodium hydroxide ("caustic soda"), is reduced due to the presence of MFC. Also, the amount of starch in the composition may be adjusted to be higher than in otherwise comparable compositions that do not comprise MFC.

### BACKGROUND OF THE INVENTION

Starch-based adhesives (or adhesives based on starch derivatives) are generally known, in particular in the paper industries.

For example, US 3 434 901 discloses a suspension of raw or uncooked starch in a suitable liquid carrier. For example, raw corn, tapioca or potato starch, comprising up to 40% by weight of the adhesive, suspended in a carrier consisting of water and smaller amounts of cooked starch, borax and caustic soda would constitute a typical raw starch formulation. In this state, the starch has limited or no adhesive qualities. However, at a certain temperature, dependent upon the type of starch utilized and the kind and amount of additives dissolved in the carrier, the starch granules will absorb the liquid of suspension available and swell, causing gelation of the suspension. In this state the starch has superior adhesion abilities and will form a bond between many substrates, including paper.

US 2,884,389 and US 2,886,541 disclose that a starch based corrugating adhesive can be produced that is highly water resistant or waterproof in nature. These two patents disclose reacting phenolic compounds, such as resorcinol, with an aldehyde, such as formaldehyde, under alkaline conditions in the presence of pasted starch so as to form in situ a phenolic-aldehyde resin-starch reaction product. The teaching of these two patents has been employed on a commercial scale in the production of highly water-resistant to waterproof corrugated and laminated paperboard products. US 3,294,716 teaches the addition of borax to the general phenol-aldehyde-starch formula, along with the reduction of concentration of the phenolic compound, to reduce costs and increase machine speed rates for particular corrugated paperboard products that do not require a high degree of water resistance.

However, despite further developments regarding the formulation of starch based adhesives (or adhesives based on starch derivatives), key additives known from the art, for example borax and sodium hydroxide ("caustic soda") affect the gel temperature. In particular, sodium hydroxide generally decreases the gel temperature, whereas borax generally increases the gel temperature of the starch-based adhesive, often in a manner that cannot be well controlled.

Furthermore, the gel temperature generally is dependent on the concentration and source of starch (for example corn, wheat, tapioca, potato and peas), if the starch is native or modified, the alkali sensitivity of the starch, the temperature of the water, the reaction time, stirring speed and storage time. Since the gel temperature is an important parameter that needs to be controlled during processing of the adhesive, the less additives or components are present, which may affect the gel temperature, the better for process control.

Also, additives are required that improve stability and processability of the starch-based adhesive, without affecting, among other, the gel temperature.

Moreover, the viscosity of a starch-based adhesive is commonly not stable enough over extended periods of time, in particular over a longer period of storage, nor is it stable under high shear. This is a problem for the use of starch (derivative)-based adhesives in various areas of application, in particular for making corrugated cardboards, i.e. in the process of gluing different paper sheets together.

Paper used for cardboards is typically more absorbent than paper used for other purposes which means that the water content in any adhesive used to bond these types of paper together should ideally be comparatively low and/or the adhesive should be formulated to not overly penetrate into the absorbent substrate. This requirement may lead to further requirements in regard to controlling the overall viscosity and gel properties of the adhesive.

### SUMMARY OF THE INVENTION

Based on the problems outlined above, and in view of the prior art, it is an object of the present invention to provide starch based adhesives (or adhesives based on starch derivatives) that allow for improved control of key process parameters, such as gel temperature and viscosity, and avoid or minimize any of the disadvantages outlined above.

In accordance with one aspect of the present invention, this problem and others is/are solved by an adhesive composition comprising:
- at least one starch and/or at least one starch derivative, in an amount of 5% w/w to 60% w/w, of the overall adhesive composition;
- at least one solvent, said solvent preferably comprising or consisting of water, in an amount of 30% w/w to 95% w/w of the overall adhesive composition;
- microfibrillated cellulose in an amount of 0.01 % w/w to 10 % w/w of the overall adhesive composition,
- alkaline, preferably alkali hydroxide, further preferably NaOH, in a total amount, that is from 0.05 % w/w to 0.8 % w/w, preferably 0.1% w/w to 0.5%, w/w further preferably from 0.1.% w/w to 0.3%, w/w, of the overall adhesive composition, and/or in a total amount of 0.1% w/w to 2.7 % w/w, preferably 0.1% w/w to 2.2% w/w, preferably 0.3% w/w to 1.5%, w/w further preferably 0.3% w/w to 1.3 % w/w, as measured relative to the overall amount of starch in the overall adhesive composition.

In embodiments of the invention, the amount of microfibrillated cellulose in said adhesive composition is from 0.02 % w/w, relative to the overall weight of the composition to 8 % w/w, preferably from 0.05 % w/w to 5 % w/w, further preferably from 0.05 % w/w to 2 % w/w, further preferably from 0.05 % w/w to 0.5 % w/w, further preferably from 0.05 % w/w to 0.15 % w/w, **and/or** wherein the amount of microfibrillated cellulose is from 0.02 % w/w to 20 % w/w, preferably 0.04 % w/w to 4 % w/w, preferably from 0.1 % w/w to 2 % w/w, further preferably 0.2 % w/w to 1.4% w/w, as measured relative to the overall amount of starch in the adhesive composition.

In embodiments of the invention, the amount of microfibrillated cellulose in said adhesive is from 0.02 % w/w to 0.09 % w/w, as measured relative to the overall amount of starch in the adhesive composition.

The inventors have surprisingly found that comparatively low amounts of MFC can be used in starch-based adhesives, for example 10% w/w or less, or 5% w/w or less, while still achieving the advantages that MFC has as an additive, which advantages are described throughout the disclosure. Generally, the skilled person wants to keep the amount of additive needed as low as possible. Without wishing to be bound by theory, it is believed that the effect of using small amounts of MFC as an additive to significantly affect the properties of the overall adhesive composition is due to the network-forming (cross-linking) capabilities of MFC. Generally, if the amount of MFC is chosen too low, for example below 0.01% w/w, the cross-linked network may not be strong enough. Or, at even lower amounts, the amount of fibrils may be too low to form a continuous network. On the other hand, if too much MFC is present, for example more than 10% w/w, then the viscosity may be too high and the overall composition may be difficult to process.

In accordance with the invention, MFC (also) acts as a cross-linking agent in the adhesive. MFC (also) acts as a viscosity modifier and stabilizer, in particular as a thixotropic additive.

In accordance with the present invention, the amount of microfibrillated cellulose (and/or starch), sometimes also referred to as "dry matter" (also: "solids content") is measured as the weight of microfibrillated cellulose (and/or starch) relative to the weight of the overall composition, including solvent, MFC, starch, alkaline and optional further additives. See Example 2 for more details how to measure and determine the amount of MFC.

Unless explicitly stated otherwise, all ranges or values given for the amount of any component in the compositions of the present invention are meant to be given in weight % of the component relative to the overall weight of the adhesive composition ("w/w").

In preferred embodiments, said composition comprises only trace amounts of boric acid, or derivatives thereof, in particular borax, wherein said trace amounts, together, amount to less than 1000 ppm, preferably less than 500 ppm, further preferably less than 200 ppm, further preferably less than 100 ppm.

In accordance with the present invention, although "borax" and boric acid are generally understood to not be the same compound; [borax is a salt of boric acid, i.e. borax is sodium (tetra)borate, while boric acid is hydrogen borate], whenever the term "borax" is used, the term refers to boric acid and its alkaline metal salts. In particular, a number of related minerals or chemical compounds that differ primarily in their crystal water content are referred to as *"borax"* and are included within the scope of the present invention, in particular the decahydrate. Commercially sold borax is typically partially dehydrated.

In particular, borax in accordance with the present invention comprises or essentially consists of the following minerals or chemical compounds that differ in their crystal water content:
- Anhydrous borax (Na₂B₄O₇)
- Borax pentahydrate (Na₂B₄O₇·5H₂O)
- Borax decahydrate (Na₂B₄O₇·10H₂O),
or combinations thereof.

The decahydrate may also be represented as Na₂[B₄O₅(OH)₄]·8H₂O, since borax contains the [B₄O₅(OH)₄]²⁻ ion. "Borax" may be converted to boric acid and other borates, which have many applications. Its reaction with hydrochloric acid to form boric acid is:

Na₂B₄O₇·10H₂O + 2 HCl → 4 H₃BO₃ + 2 NaCl + 5 H₂O

Boric acid is also known as hydrogen borate, boracic acid, orthoboric acid and acidum boricum.

In further embodiments, the composition preferably comprises no or only trace amounts (as defined above) of boric acid, glyoxal, glutaraldehyde, formaldehyde, citric acid or (poly)carboxylic acids, dicaproxypropylene succinate, aldehyde based or oxidized polysaccharides, bis-benzidine-2,2'-disulfonic acid, 1,5-difluoro-2,4-dinitrobenzene, dimethyl adipate, organic peroxides, trisodium citrate, phosphorous oxychloride, chlorohydrins, salts or derivatives of trimetaphosphate (TMF), e.g. sodium trimetaphosphate, sodium tripolyphosphates, polymetaphosphates (e.g. hexametaphosphate), POCI3, biphenyl compounds, N,N,-dimethylol- imidzolidon-2 (DMEU), cyanuric chloride, adipate, adipic acetic mixed anhydride, adipic acid/acetic acid, epichlorohydrin, sodium aluminate, divinylbenzene, divinylsulfone, or salts thereof.

In embodiments of the invention, the amount of solvent is from 30 % w/w to 80 % w/w, further preferably from 55 % w/w to 70 % w/w, of the overall adhesive composition.

In embodiments of the invention, the overall amount of starch in said composition is from 15 % w/w to 50 % w/w, preferably from 25 % w/w to 48 % w/w or from 22 % w/w to 35 % w/w, more preferably from 30 % w/w to 46 % w/w and further preferably from 35 % w/w to 45 % w/w, of the overall adhesive composition.

The inventors have surprisingly found that a higher amount of starch can be used in a starch-based adhesive composition that also comprises MFC, compared to the otherwise same composition that does not comprise MFC. Without wishing to be bound by theory, it is believed that this possibility to incorporate more starch into the overall composition is due to the thixotropic (shear thinning) capabilities of MFC. During storage, MFC stabilizes the dispersion, which maintains stable (high) viscosity. In processing (e.g. applying the adhesive on flute and/or liner of a cardboard), the shear thinning properties of MFC allow to spread and apply the overall composition even if the same comprises a large amount of starch that would otherwise make continuous processing difficult.

In embodiments of the invention, the at least one starch is a native starch, or a chemically or a physically modified starch, or a mixture thereof.

The adhesive compositions according to the present inventions may comprise other components, e.g. resins, water resistant additives, polysaccharides, penetration agents, tackifiers, surface tension agents, defoamers, fillers, pigments, or preservatives, among others.

In accordance with the present invention, an *"**adhesive**"* is understood to be a material that is applied to the surfaces of articles to join these surfaces permanently by an adhesive bonding process. An adhesive is a substance capable of forming bonds to each of the two parts, wherein the final object consists of two sections that are bonded together. A particular feature of adhesives is that relatively small quantities of the same are required compared to the weight of the final object.

In accordance with the present invention, a ***starch*** is a carbohydrate consisting of a large number of glucose units joined by alpha-glycosidic bonds. Preferred sources for starch are potatoes, wheat, maize (corn), rice, pea, tapioca and sago, among others.

In accordance with the present invention, a ***modified starch*** is a starch that has been chemically or physically modified, for example by hydrolysis or enzymatically. Exemplary modified starches in embodiments of the present invention are dextrins or crosslinked starches.

In embodiments of the present invention, the starch preferably comprises unmodified wheat or corn starches, but may comprise any of the starches commonly used in an adhesive, that is, all starches and derivatives, which contain sufficient available hydroxyl groups so that a copolymerization reaction can occur between them and other reactants.

**Microfibrillated cellulose** (also known as *"reticulated"* cellulose or as *"superfine"* cellulose, or as *"cellulose nanofibrils",* among others) is a cellulose-based product and is described, for example, in US 4 481 077, US 4 374 702 and US 4 341 807. In accordance with the present invention, microfibrillated cellulose has at least one reduced length scale (diameter, fiber length) vis-à-vis non-fibrillated cellulose. In (non-fibrillated) cellulose, which is the starting product for producing microfibrillated cellulose (typically present as a *"cellulose pulp"*), no, or at least not a significant or not even a noticeable portion of individualized and *"separated"* cellulose *"fibrils"* can be found. The cellulose in wood fibres is an aggregation of fibrils. In cellulose (pulp), elementary fibrils are aggregated into microfibrils which are further aggregated into larger fibril bundles and finally into cellulosic fibres. The diameter of wood based fibres is typically in the range 10-50 µm (with the length of these fibres being even greater). When the cellulose fibres are microfibrillated, a heterogeneous mixture of "released" fibrils with cross-sectional dimensions and lengths from nm to µm may result. Fibrils and bundles of fibrils may coexist in the resulting microfibrillated cellulose. The diameter of the microbrillated cellulose of the present invention is typically in the nanometer range.

In the microfibrillated cellulose ('MFC') as described throughout the present disclosure, individual fibrils or fibril bundles can typically be identified by way of conventional optical microscopy or by electron microscopy.

In embodiments, the microfibrillated cellulose in accordance with the present invention is characterized, among others, by the following feature:
The microfibrillated cellulose results in a gel-like dispersion that has a zero shear viscosity, η₀, of at least 3000 Pa·s, preferably at least 4000 Pa·s, preferably at least 5000 Pa·s, preferably at least 6000 Pa·s, further preferably at least 7000 Pa·s, as measured in polyethylene glycol (PEG) as the solvent, and at a solids content of the MFC of 0.65%.

The zero shear viscosity, η₀ (*"viscosity at rest"*) is a measure for the stability of the three-dimensional network making up the gel-like dispersion.

The *"zero shear viscosity"* as disclosed and claimed herein is measured as described in the following. Specifically, the rheological characterization of the MFC dispersions ("comparative" and "in accordance with the invention") was performed with PEG 400 as the solvent. "PEG 400" is a polyethylene glycol with a molecular weight between 380 and 420 g/mol and is widely used in pharmaceutical applications and therefore commonly known and available.

The rheological properties, in particular zero shear viscosity was/were measured on a rheometer of the type *Anton Paar* Physica MCR 301. The temperature in all measurements was 25 °C and a "plate-plate" geometry was used (diameter: 50mm). The rheological measurement was performed as an oscillating measurement (amplitude sweep) to evaluate the degree of structure in the dispersions and as rotational viscosity measurements, in which case the viscosity was measured as a function of the shear rate to evaluate the viscosity at rest (shear forces → 0), as well as the shear thinning properties of the dispersions. The measurement method is further described in PCT/EP2015/001103 (EP 3 149 241).

In embodiments, the microfibrillated cellulose has a water holding capacity (water retention capacity) of more than 50, preferably more than 60, preferably more than 70, preferably more than 75, preferably more than 80, preferably more than 90, further preferably more than 100. The water holding capacity describes the ability of the MFC to retain water within the MFC structure and this again relates to the accessible surface area. The water holding capacity is measured by by diluting the MFC samples to a 0.3% solids content in water and then centrifuging the samples at 1000 G for 15 minutes. The clear water phase was separated from the sediment and the sediment was weighed. The water holding capacity is given as (mV/mT)-1 where mV is the weight of the wet sediment and mT is the weight of dry MFC analyzed. The measurement method is further described in PCT/EP2015/001103 (EP 3 149 241).

Without wishing to be bound by theory, the good water retention properties of MFC, including network forming of MFC with starch, are advantageous in avoiding the leaching of water from the adhesive into the cardboard during processing.

In embodiments of the invention, the pH value of the adhesive composition is from 8 to 14, preferably from 10 to 13, further preferably from 11.5 to 12.5.

In accordance with a **further aspect** of the present invention, the above-mentioned problem and others is/are solved by a **process** for preparing a starch-based adhesive, or an adhesive based on a starch derivative, which process comprises the steps of:
(a) mixing at least one starch and/or at least one starch derivative, or a mixture thereof, with at least one solvent, in particular a solvent comprising or consisting of water,
(b) optionally adding one or more additives to the mixture from (a);
(c) during or after step (a), or during or after optional step (b): adding microfibrillated cellulose, which is preferably present in a solvent, preferably a solvent comprising or essentially consisting of water,
(d) adding alkaline, preferably alkali hydroxide, further preferably NaOH, to the mixture of (a) and/or the mixture of (b) and/or the mixture of (c), in a ratio dry alkaline, preferably alkali hydroxide, further preferably NaOH, preferably in amount relative to dry starch of from 0.1 % w/w to 3% w/w, further preferably 0.5 % w/w to 2% w/w;
(e) optionally adding a further amount of the at least one solvent, in particular a solvent comprising or consisting of water to the mixture of (b) and/or (c) and/or (d);
(f) optionally adding a further amount at least one starch/or at least one starch derivative, or a mixture thereof, and/or a further amount of microfibrillated cellulose to the mixture of (b), (c) and/or (d)
(g) dispersing the mixture of (c), (d), (e) or (f) until a homogeneous mixture is obtained.

The process may include any further steps, in any sequence, and may include any repetition of any or all of steps (a) through (g).

In particular, further alkaline may be added after step (d) and/or further additives may be added after any or all of steps (c) through (f)
All embodiments as disclosed above in regard to the composition apply, mutatis mutandis, also to the process, in particular in regard to the properties and the relative amounts of MFC, starch and solvent.

In embodiments of the invention, the viscosity of the mixture increases by at least 10%, preferably at least 25%, further preferably by at least 35%, in step (c), relative to the viscosity of the mixture of step (a) or of step (b).

The viscosity is determined as the "Lory viscosity" in units of "seconds" and determined by the following method. Lory viscosity is measured with a Lory viscosity cup (Elcometer model 2215/1, according to standards ASTM D 1084-D or ASTM D4212). This device consists of a conventional cylindrical cup with a needle fixed to the bottom. The cup is first dipped into the adhesive, which then empties through an escape hole. The flow time is measured as soon as the point of the needle is discernible. All measurement are conducted at room temperature.

In embodiments of the invention, no or only trace amounts of boric acid, or derivatives thereof, are added in any of steps (a) through (g), in particular no or only trace amounts of borax, preferably wherein, when taken together, the traces amount to less than 1000 ppm, preferably less than 500 ppm, further preferably less than 200 ppm, further preferably less than 100 ppm.

In embodiments of the invention, in step (a), first a primary starch is added to a predetermined amount of solvent until a predetermined viscosity is achieved, and then, in or after step (b), a secondary starch i.e. a second amount of the same or of different starch or starch derivative, is added.

In embodiments of the present invention, the pH value of the final adhesive composition, resulting from the process is from 8 to 14, preferably from 10 to 13, further preferably from 11.5 to 12.5.

In accordance with a **further aspect** of the present invention, the above-mentioned problem and others is/are solved by providing microfibrillated cellulose for use as a rheology modifying and stabilizing agent in adhesives comprising starch and/or starch derivatives, in particular as a replacement for Borax, wherein replacing Borax with MFC increases and stabilizes the viscosity of the composition (vis-à-vis the otherwise same composition that comprises Borax but no MFC), and/or wherein replacing Borax with MFC does not significantly affect the gel temperature.

In a further aspect, the present invention relates to the use of microfibrillated cellulose as a gel temperature or as a viscosity stabilizing agent in adhesives comprises starch and/or starch derivatives, or as both.

In a further aspect, the present invention relates to the use of microfibrillated cellulose as a full or as a partial replacement for boric acid or any derivative thereof, in particular as a full or partial replacement for borax, in starch-based adhesives.

In embodiments, the present invention relates to the use of microfibrillated cellulose as a partial or complete replacement for boric acid or any derivative thereof, in particular as a replacement for borax, in starch-based adhesives, wherein partially or completely replacing the boric acid or derivative thereof with microfibrillated cellulose increases the viscosity of the composition, vis-à-vis the otherwise same composition that comprises boric acid or a derivative thereof in the same amount as the microfibrillated cellulose, but comprises no or not as much microfibrillated cellulose.

In embodiments of the invention, fully or partially replacing boric acid or derivative thereof with microfibrillated cellulose leads to a gel temperature of the overall starch adhesive that does not differ from the gel temperature of the same overall starch adhesive without either boric acid, or a derivative thereof, nor MFC, by more than 2 K, further preferably not by more than 1 K.
or wherein fully or partially replacing the same amount of boric acid (or a derivative thereof) with the same amount of MFC lowers the gel temperature of the overall composition by at least 1 K, preferably by at least 2 K.

In embodiments, at least 0.05 % w/w of boric acid or a derivative thereof, in particular of borax, relative to the overall weight of the starch based adhesive is replaced by microfibrillated cellulose, preferably at least 0.1 % w/w or 0.2 % w/w, 0.3 % w/w or 0.4 % w/w, further preferably at least 0.5 % w/w or 0.7 % w/w, further preferably at least 1 % w/w.

All embodiments as disclosed above in regard to the composition and the process of preparing the adhesive composition apply, mutatis mutandis, also to the uses, in particular in regard to the properties and the relative amounts of MFC, starch and solvent.

Without wishing to be bound by theory, it is believed that the addition of microfibrillated cellulose to a starch (derivative)-based adhesive leads to a network structure based on physical and/or chemical interactions between the microfibrillated cellulose units and the starch (derivative) units by way of hydrogen bonding. It is believed that microfibrillated cellulose is an efficient thickener in polar solvent systems, in particular in water, and builds large three dimensional networks of fibrils which are stabilized by hydrogen bonds. This stabilized network is believed to support a stable gel structure.

These fibrils have hydroxyl groups on the surface that are dissociated (O) at the high pH prevailing in starch adhesives, this leading to intra and inter-particular interactions. As described above, starch is composed of amylose and amylopectin. Amylose is a helical linear polymer composed of α(1→4)-bound D-glucose units, with hydroxyl groups which are pointed towards outside the helix. The fibril network of microfibrillated cellulose is believed to interact through hydrogen bonding with those groups, building up a protective layer around the amylose chains, thus protecting the starch against high shear degradation and stabilizing the viscosity. Overall, MFC is a network of entangled fibrils that can entrap starch molecules and in that way strengthen and/or stabilize the starch composition.

Furthermore, again without wishing to be bound by theory, the water holding capacity of microfibrillated cellulose is believed to prevent water from migrating to and through the paper. Therefore, adding microfibrillated cellulose to starch (derivative) based adhesives is particularly useful for the manufacture of corrugated cardboard, where water migration out of the adhesive into the paper destabilizes the final cardboard product and may lead to warp and delamination, among others.

Furthermore, again without wishing to be bound by theory, unlike borax, microfibrillated cellulose does not react with NaOH, or only reacts to a lesser degree than borax with NaOH. Already for that reason, the presence of microfibrillated cellulose does not significantly affect the gel temperature, or at least affects the gel temperature to a lesser degree than borax does, as borax reacts with NaOH. Also, borax continues to react with alkaline (in particular NaOH) during storage, which means that an increase in gel temperature for the adhesive is observed over time in case borax is present in the composition.

In a further aspect, the present invention relates to a process for making cardboard, wherein said process comprising at least the following steps:
providing a starch-based adhesive composition according to any one of the embodiments as disclosed above **or**
providing the following starch-based adhesive composition:
   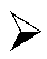 at least one starch and/or at least one starch derivative, in an amount of 5% w/w to 60% w/w, of the overall adhesive composition;
   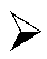 at least one solvent, said solvent preferably comprising or consisting of water, in an amount of 30% w/w to 95% w/w of the overall adhesive composition;
   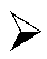 microfibrillated cellulose in an amount of 0.01 % w/w to 10 % w/w of the overall adhesive composition, and
applying said starch-based adhesive to at least a part of the tips of the flutes of a corrugated piece of paper, on at least one side, preferably on both sides; and
in a corrugator, applying at least one liner onto said corrugated piece of paper, preferably applying a further liner on the other side of the corrugated piece of paper, and
preparing a single, double, triple or further multiple wall cardboard, preferably in a continuous process.

In a further aspect, the present invention relates to corrugated paperboards or cardboards having at least one flute and at least one liner comprising the starch-based adhesive composition according to any one of the embodiments as disclosed above, or comprising the following starch-based adhesive composition:
- at least one starch and/or at least one starch derivative, in an amount of 5% w/w to 60% w/w of the overall adhesive composition;
- at least one solvent, said solvent preferably comprising or consisting of water, in an amount of 30% w/w to 95% w/w of the overall adhesive composition;
- microfibrillated cellulose in an amount of 0.01 % w/w to 10 % w/w, of the overall adhesive composition.

In a further aspect, the present invention relates to the use of the starch-based adhesive composition of any of the embodiments as disclosed above **or** to the use of the following composition:
- at least one starch and/or at least one starch derivative, in an amount of 5% w/w to 60% w/w of the overall adhesive composition;
- at least one solvent, said solvent preferably comprising or consisting of water, in an amount of 30% w/w to 95% w/w of the overall adhesive composition;
- microfibrillated cellulose in an amount of 0.01 % w/w to 10 % w/w of the overall adhesive composition,

in the manufacture of corrugated paperboards or cardboards.

In embodiments, the amount of microfibrillated cellulose in the adhesive composition as used in the manufacture of corrugated paperboards or cardboards is from 0.01% w/w, relative to the overall weight of the composition to 10% w/w, preferably from 0.02% w/w to 8% w/w, further preferably from 0.05% w/w to 5% w/w, further preferably from 0.05 w/w % to 2% w/w, further preferably from 0.05 % w/w to 0.5%, further preferably from 0.05 % w/w to 0.15% w/w, **or** the amount of microfibrillated cellulose is from 0.02% w/w to 20% w/w, preferably 0.04% w/w to 4% w/w, preferably 0.1% w/w to 2% w/w, further preferably 0.2 % w/w to 1.4% w/w, as measured relative to the overall amount of starch in the adhesive composition.

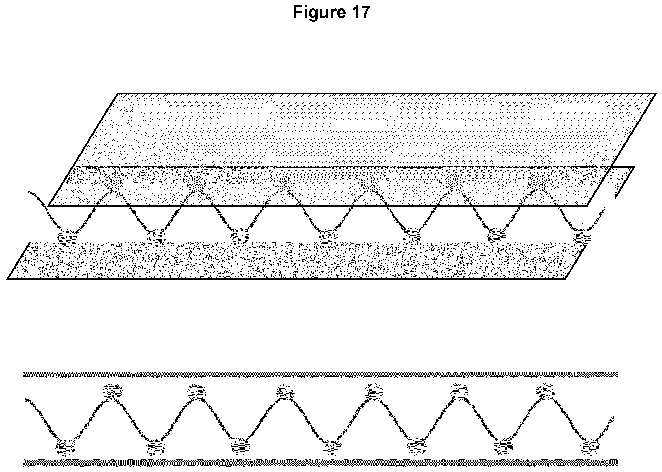

A schematic illustration of "fluted" ("corrugated") piece of paper, i.e. a piece of paper that has been brought into contact with heat or steam, or both, in order to have a corrugated ("fluted") shape is provided in **Figure 17****,** which also shows how to exemplary apply glue to the tips of the flutes. In embodiments of the present invention, the glue may be applied along the entire tip or only along parts thereof.

**Figure 17** also illustrates an upper and a lower liner as applied onto the upper and lower tips of the fluted paper, called single facer and double backer side of the board, resulting in a single walled cardboard.

In accordance with the present invention, using the composition according to the present invention , or the composition as obtained in the method of the present invention , in the manufacture of cardboards results in at least one of the following advantages, preferably essentially all of the following advantages, that will also be manifested in the resulting cardboard:
- Microfibrillated cellulose is well dispersible in starch (derivative)-based adhesives
- Microfibrillated cellulose can be used to adjust the viscosity of the final adhesive and stabilize the same over time, in particular during storage and also in regard to resistance under high shear
- Microfibrillated cellulose provides flexibility for viscosity corrections at any stage of the process
- Microfibrillated cellulose is thixotropic (i.e. shows shear thinning), higher overall viscosity can be tolerated
- Microfibrillated cellulose renders unnecessary to add detrimental additives, in particular borax and allows to reduce the amount of NaOH ("caustic soda") to be added
- Microfibrillated cellulose replacing borax and lowering the NaOH content allows to bring the gel temperature, which is an important process parameter, of the overall composition closer to the gel temperature of the starch adhesive
- Microfibrillated cellulose replacing borax and lowering the NaOH content allows to better control the gel temperature, which is an important process parameter
- Microfibrillate cellulose shows shear thinning, which improves adhesive application properties
- Microfibrillated cellulose increases the storage modulus of the adhesive both in the liquid phase before curing and once the adhesive is cured.
- Microfibrillated cellulose provides viscosity stability over time, in particular over a longer period of storage
- Microfibrillated cellulose provides viscosity stability under high shear impact
- Experiments on a line for making corrugated cardboard have shown that using a starch based adhesive comprising microfibrillated cellulose (as described below in the Examples Section) leads to an increase in production speed of 37% to achieve equal or better quality cardboard
- Factory trials have shown that 33% reduction in glue consumption can be achieved by using a starch based adhesive comprising microfibrillated cellulose (as described below in the Examples Section)
- Microfibrillated cellulose improves the quality of the board by reducing water defects, thus preventing water from penetrating into the board, which means that flatter boards are obtained, thus increasing speed of the post process steps (printing, cutting, stacking).
- Microfibrillated cellulose improves the process control during manufacturing of the corrugated boards; with microfibrillated cellulose in the starch based adhesive it is easier to remove warps and water defects on line by adjusting heat and pressure.
- Microfibrillated cellulose improves the quality of the board by increasing the bond strength of the board.
- Overall, using the adhesive composition according to the present invention results in stronger boards, for example as measured by the pin adhesion test PAT.

### BRIEF DESCRIPTION OF THE FIGURES

In the following, the present invention, and aspects thereof, is/are illustrated by way of Figures, which are not meant to limit the invention but only to illustrate the same.
**Figure 1** shows the bond strength (according to the pin adhesive test, PAT) for the same board quality processed with, on the one hand, the MFC starch adhesive in accordance with the invention and, on the other hand, the reference (only) borax adhesive, not in accordance with the invention, i.e. not comprising any MFC;
**Figure 2** shows the edge crush test (ECT) and the torsional strength (stiffness) for the same board quality processed with, on the one hand, the MFC starch adhesive in accordance with the invention and, on the other hand the reference borax adhesive (no MFC) not in accordance with the invention;
**Figure 3** shows the viscosity behavior (lack of stability) of an adhesive not in accordance with the invention, i.e. a Minocar native wheat starch adhesive as known from the art, which comprises borax as additive, but not MFC;
**Figure 4** shows the viscosity behavior of an adhesive in accordance with the invention, i.e. a Minocar native wheat starch adhesive, which comprises MFC as an additive;
**Figure 5** shows the Lory viscosity and the temperature of a starch based adhesive in accordance with the present invention (i.e. comprising MFC) over time during storage (in a storage tank);
**Figure 6** shows a comparison of the grammage and adhesion strength of an adhesive in accordance with the present invention, as used in corrugated cardboards (right column, respectively) compared to an adhesive known from the art (left column, respectively);
**Figure 7** shows how using MFC as an additive in starch based adhesives increases the storage modulus of the uncured adhesive;
**Figure 8** shows that MFC is a more efficient thickener for a starch adhesive than borax;
**Figure 9** shows how adding MFC to the starch adhesive, and removing borax altogether, stabilizes the gel temperature between 56°C and 58°C, even when varying the MFC content from 0.1% dry matter to 0.5% dry matter, at a similar NaOH content, respectively;
**Figure 10** shows the effect of NaOH on the gel temperature of a starch adhesive with MFC and the difference in gel temperature between a MFC starch adhesive vs a borax starch adhesive prepared according to the Stein-Hall process with native corn starch;
**Figure 11** shows the dependence of the gel temperature on the NaOH content for different types of corn and wheat starches comprising MFC.
**Figure 12** shows the effect of MFC on the gel temperature and the storage modulus of the starch adhesive prepared with modified wheat starch and according to Corrtech process;
**Figure 13** shows the effect of MFC and borax on the storage modulus and curing profile of the starch adhesives in dependence of the temperature;
**Figure 14** shows the effect of the MFC concentration on the gelatinization speed of the starch adhesive (Stein-Hall, native wheat);
**Figure 15** shows the effect of the MFC concentration on the storage modulus of the cured starch adhesive (Stein-Hall, native wheat);
**Figure 16** schematically depicts a continuous production line for making corrugated cardboard (single facer);
**Figure 17** schematically depicts a layer of cardboard comprising one layer of corrugated paper having the flutes tips coated with adhesive as well as an upper and a lower liner;
**Figure 18** shows the effect of MFC on the bond strength of the double backer side of BB24b quality corrugated boards compared to the bond strength of the borax reference boards; the boards with the MFC starch (Stein-Hall) adhesive are produced at higher production speed than the reference boards with borax starch (Stein-Hall) adhesive;
**Figure 19** shows the effect of MFC on glue consumption for production of BB24b quality corrugated boards compared to the consumption of the borax reference adhesive run at lower production speed;
**Figure 20** shows the effect of MFC on the thickness, edgewise crush resistance and torsion strength (stiffness) of the corrugated (BB24b) boards, compared to the reference adhesive comprising borax run at lower production speed:

### DETAILED DESCRIPTION OF THE INVENTION

In accordance with the present invention and as further specified in STM D 907-82, Standard Definitions of Terms Relating to Adhesives, published in Volume 15.06 __ Adhesives, 1984 Annual Book of ASTM Standards, an *"**adhesive**"* is understood to be a material that is applied to the surfaces of articles to join these surfaces permanently by an adhesive bonding process. An adhesive is a substance capable of forming bonds to each of the two parts when the final object consists of two sections that are bonded together. A particular feature of adhesives is the relatively small quantities that are required compared to the weight of the final objects.

In accordance with the present invention, a ***starch*** (also known as "amylum") is a polymer consisting of a large number of glucose units joined by glycosidic bonds. Starch is found in large amounts in foods such as potatoes, wheat, maize (corn), rice, pea, tapioca and sago, among others. Starch typically comprises two types of molecules: the linear and helical amylose and the branched amylopectin. Depending on the plant, starch generally contains 20 to 25% amylose and 75 to 80% amylopectin by weight.

While amylopectin can be supplied in cold-water-soluble form, amylose is generally insoluble. Amylose can be dissolved with strong alkali, for example by cooking with formaldehyde or by cooking in water at 150-160°C under pressure. Upon cooling or neutralization, such amylose dispersions typically form gels at concentrations higher than 2% and will precipitate at concentrations lower than 2%. Amylose fractions are never truly soluble in water and in time will form crystalline aggregates by hydrogen bonding - a process known as retrogradation, or setback. Retrogradation is the cause of viscosity instability mentioned above and found to a varying degree in starch-based adhesives. Amylopectin is more soluble and less prone to retrogradation.

In embodiments of the present invention, the starch preferably is unmodified wheat starch or corn starch, but may be any of the starches commonly used in the adhesive art, that is, all starches and derivatives which contain sufficient available hydroxyl and/or functional groups so that a copolymerization reaction can occur between them and the other two reactants.

A modified starch is a starch that has been chemically modified, for example by hydrolysis, to allow the starch to function properly under conditions frequently encountered during processing or storage, such as high heat, high shear, high pH, freeze/thaw and cooling. Preferred modified starches in embodiments of the present invention are dextrins.

***Dextrins*** are a group of low-molecular-weight carbohydrates produced by the hydrolysis of starch or glycogen. Dextrins are mixtures of polymers of D-glucose units linked by α-(1→4) or α-(1→6) glycosidic bonds. Dextrins can be produced from starch using enzymes like amylases or, for example, by applying dry heat under acidic conditions (pyrolysis). Dextrins produced by heat are also known as **pyrodextrins.** Dextrins are partially or fully water-soluble and typically yield solutions of low viscosity.

As outlined above, in a second aspect, the present invention relates to a process for preparing a starch-based adhesive, or an adhesive based on a starch derivative.

Most starches contain 20-30% by weight of amylose, although certain specialty types can have as little as 0% or as high as 80%. Because of the amylose fraction, starch suspended in cold water is initially unable to act as an adhesive because the starch is so tightly bound in crystalline regions. These granules must be opened through processing to obtain adhesive bonding. Heating in water is the simplest method of breaking up starch granules. On heating in water, starch granules first swell and then burst open with a resulting thickening of the suspension. The temperature at which this thickening of the suspension occurs is called the gelation temperature.

In embodiments of the present invention, the maximum temperature reached in step (a) is 42 degrees Celsius. In embodiments of the present invention, the maximum temperature reached in step (e) is 32 degrees Celsius.

The process may comprise the following. In a first embodiment, salts (preferably the chlorides of metals such as calcium, magnesium and zinc) are added to a suspension of the starch (derivative) in the solvent, and the adhesive is produced by controlling temperature and viscosity by way of controlling the time of stirring.

Since alkaline, in particular caustic soda is added to the starch suspension; the suspension may be neutralized with acid (buffer) later in the process.

Plasticizers are sometimes used to control brittleness of the adhesive line and to regulate the speed of drying. Common plasticizers include glycerin, glycols, sorbitol, glucose and sugar. These types of plasticizers may act as a hygroscopic agent to decrease the drying rate of the film. Plasticizers based on saps, polyglycols and sulfonated oil derivates lubricate the layers within the dried adhesive and, thus, impart flexibility. Urea, sodium nitrate, salicylic acid and formaldehyde plasticize by forming a solid solution with the dried adhesive. All of these additives, any combination thereof, or only one such additive, may be added in step (a) or in step (b), or in step (ci), or in step (d), or after any of these steps.

In embodiments of the present invention, further additives may be used, such as calcium chloride, urea, sodium nitrate, thiourea and guanidine salts are used as liquefiers to reduce viscosity. These additives may be added at about 5-20% based on dry starch. Improved cold-water resistance may be achieved by adding polyvinyl alcohol or polyvinyl acetate blends. These adhesives will also dissolve in hot water, which is often a benefit.

Optimal moisture resistance may be achieved through the addition of thermosetting resins, such as urea formaldehyde or resorcinol formaldehyde.

Mineral fillers, such as kaolin clay, calcium carbonate and titanium dioxide, may be added in step (i), step (ii) or in step (iii), or in step (iv), or after any of these steps, in order to reduce cost and control penetration into porous substrates. These additives may be added at concentrations of 5-50%.

Other additives that may be added in step (i), step (ii), or in step (iii), or in step (iv), or after any of these steps, include but are not limited to preservatives, bleaches, and defoamers. Preservatives that are preferred to prevent microbial activity include formaldehyde (35% solids) at 0.02-1.0%, copper sulfate at about 0.2%, zinc sulfate, benzoates, fluorides and phenols. Preferred bleaching agents include sodium bisulfite, hydrogen and sodium peroxide, and sodium perborate. Organic solvents may be added to improve adhesion to waxed surfaces.

As discussed above, microfibrillated cellulose may be advantageously used to modify the rheology of adhesives, in particular starch based (or starch derivative based) adhesives, and in particular to control the gel temperature. The possibility to control the gel temperature is of particular importance for making corrugated cardboards (boxboards), as the adhesive needs to be applied to various layers, in particular on to the flutes peaks of the corrugated paper layer, in a controlled manner, followed by a gelatinization reaction to form a strong bond between the papers. If the gelatinization happens to slow or to rapid, the bonding and quality of the boards will be poor, due to insufficient (too low gel temperature) or excessive (too high gel temperature) penetration of the glue into the papers. Furthermore, with microfibrillated cellulose, the gel temperature is stable with storage time, which is of high importance for the production of corrugated boards, whereas it increases the production quality and capacity, when the same glue can be run on Monday, as on Friday, with the same corrugator settings.

Most corrugated boxboard for making cartons is bonded with starch-based adhesives. A fraction of the starch needed to formulate the adhesive (called the carrier) is swelled or gelatinized with aqueous caustic. This mixture is blended with a concentrated suspension of raw starch. The paste is applied onto the corrugated flutes and the liners are attached. Upon subsequent exposure to heat, the starch granules swell and burst, forming a strong bond.

Experiments on a line for making corrugated cardboard (see below) have shown that using a starch based adhesive comprising microfibrillated cellulose (as described below in the Examples Section) leads to the following advantages, among others:
- an increase in production speed of up to 37%, while achieving equal or better quality cardboard, thus saving time and facilitating the post process steps due to flatter boards.
- an increase in bond strength between the flute and liners of the board.
- a reduction in the amount of adhesive required to arrive at cardboards that have the same strength and performance as cardboards using conventional adhesives (that comprise borax)

This translates to saving time and processing costs [less heat (energy) needed for curing due to less water to evaporate when less adhesive is applied; deduced water impact/defects/warp on the paper during process and post process: achieves flatter cardboards].

*"Microfibrillated cellulose"* (MFC) in accordance with the present invention is to be understood as relating to cellulose fibers that have been subjected to a mechanical treatment resulting in an increase of the specific surface and a reduction of the size of cellulose fibers, in terms of cross-section (diameter) and/or length, wherein said size reduction preferably leads to *"fibrils"* having a diameter in the nanometer range and a length in the micrometer range.

Microfibrillated cellulose (also known as *"reticulated"* cellulose or as *"superfine"* cellulose, or as *"cellulose nanofibrils",* among others) is a cellulose-based product and is described, for example, in US 4 481 077, US 4 374 702 and US 4 341 807. According to US 4 374 702 *("Turbak'),* microfibrillated cellulose has distinct properties vis-à-vis cellulose products not subjected to the mechanical treatment disclosed in US 4 374 702. In particular, the microfibrillated cellulose described in these documents has reduced length scales (diameter, fiber length), improved water retention and adjustable viscoelastic properties. MFC with further improved properties and/or properties tailor-made for specific applications is known, among others, from WO 2007/091942 and WO 2015/180844.

In cellulose, which is the starting product for producing microfibrillated cellulose (typically present as a *"cellulose pulp"*), no, or at least not a significant or not even a noticeable portion of individualized and *"separated"* cellulose *"fibrils"* can be found. The cellulose in wood fibres is an aggregation of fibrils. In cellulose (pulp), elementary fibrils are aggregated into microfibrils which are further aggregated into larger fibril bundles and finally into cellulosic fibres. The **diameter** of wood based **fibres** is typically in the range 10-50 µm (with the length of these fibres being even greater). When the cellulose fibres are microfibrillated, a heterogeneous mixture of "released" fibrils with cross-sectional dimensions and lengths from nm to µm may result. Fibrils and bundles of fibrils may coexist in the resulting microfibrillated cellulose.

In the microfibrillated cellulose ('MFC') as described throughout the present disclosure, individual fibrils or fibril bundles can be identified and easily discerned by way of conventional optical microscopy for example at a magnification of 40 x, or by electron microscopy.

In principle, any type of microfibrillated cellulose (MFC) can be used in accordance with the present invention, as long as the fiber bundles as present in the original cellulose pulp are sufficiently disintegrated in the process of making MFC so that the average diameter of the resulting fibers/fibrils is in the nanometer-range and therefore more surface of the overall cellulose-based material has been created, vis-à-vis the surface available in the original cellulose material. MFC may be prepared according to any of the processes described in the art, including the prior art specifically cited in the "Background"-Section above.

In accordance with the present invention, there is no specific restriction in regard to the origin of the cellulose, and hence of the microfibrillated cellulose. In principle, the raw material for the cellulose microfibrils may be any cellulosic material, in particular wood, annual plants, cotton, flax, straw, ramie, bagasse (from sugar cane), suitable algae, jute, sugar beet, citrus fruits, waste from the food processing industry or energy crops or cellulose of bacterial origin or from animal origin, e.g. from tunicates.

In a preferred embodiment, wood-based materials are used as raw materials, either hardwood or softwood or both (in mixtures). Further preferably softwood is used as a raw material, either one kind or mixtures of different soft wood types. Bacterial microfibrillated cellulose is also preferred, due to its comparatively high purity.

In principle, the microfibrillated cellulose in accordance with the present invention may be unmodified in respect to its functional groups or may be physically modified or chemically modified, or both.

Chemical modification of the surface of the cellulose microfibrils may be achieved by various possible reactions of the surface functional groups of the cellulose microfibrils and more particularly of the hydroxyl functional groups, preferably by: oxidation, silylation reactions, etherification reactions, condensations with isocyanates, alkoxylation reactions with alkylene oxides, or condensation or substitution reactions with glycidyl derivatives. Chemical modification may take place before or after the defibrillation step.

The cellulose microfibrils may, in principle, also be modified by a physical route, either by adsorption at the surface, or by spraying, or by coating, or by encapsulation of the microfibril. Preferred modified microfibrils can be obtained by physical adsorption of at least one compound. The MFC may also be modified by association with an amphiphilic compound (surfactant).

However, in preferred embodiments, the microfibrillated cellulose is not physically modified.

In a preferred embodiment of the present invention, the microfibrillated cellulose of any embodiment as disclosed above is prepared by a process, which comprises at least the following steps:
(1) subjecting a cellulose pulp to at least one **mechanical pretreatment** step;
(2) subjecting the mechanically pretreated cellulose pulp of step (1) to a **homogenizing step,** which results in fibrils and fibril bundles of reduced length and diameter vis-à-vis the cellulose fibers present in the mechanically pretreated cellulose pulp of step (1), said step (2) resulting in microfibrillated cellulose;
   wherein the homogenizing step (2) involves compressing the cellulose pulp from step (1) and subjecting the cellulose pulp to a pressure drop.

The **mechanical pretreatment** step preferably is or comprises a **refining step**. The purpose of the mechanical pretreatment is to "beat" the cellulose pulp in order to increase the accessibility of the cell walls, i.e. to increase the surface area.

A refiner that is preferably used in the mechanical pretreatment step comprises at least one rotating disk. Therein, the cellulose pulp slurry is subjected to shear forces between the at least one rotating disk and at least one stationary disk.

Prior to the mechanical pretreatment step, or in addition to the mechanical pretreatment step, **enzymatic (pre)treatment** of the cellulose pulp is an optional additional step that may be preferred for some applications. In regard to enzymatic pretreatment in conjunction with microfibrillating cellulose, the respective content of WO 2007/091942 is incorporated herein by reference. Any other type of pretreatment, including chemical pretreatment is also within the scope of the present invention.

In the **homogenizing step (2),** which is to be conducted after the (mechanical) pretreatment step, the cellulose pulp slurry from step (a) is passed through a *homogenizer* at least once, preferably at least two times, as described, for example, in PCT/EP2015/001103, the respective content of which is hereby incorporated by reference.

### EXAMPLES

### Example 1:

### Preparation of Microfibrillated Cellulose (MFC)

MFC as used to make the compositions in accordance with the present invention is commercially available and commercialized, for example, by *Borregaard* as *"Exilva Microfibrillated cellulose PBX 01-V", based on* cellulose pulp from Norwegian spruce (softwood).

The MFC used in the example was present as a paste, having a solids content of 9 - 11 %, i.e. the dry matter content of microfibrillated fibers in the MFC paste was 9 - 11 %, while the remaining ca. 90% were water, which was the sole solvent in this case.

### Example 2:

### Preparation of a Stein-Hall starch adhesive comprising borax (comparative example)

A starch-based adhesive as known from the art was prepared based on the following components and using the following steps:
400 kg of primary water
42 kg of primary starch (native wheat)
Stirring for 15 sec, temperature 42°C; add:
70 kg of water
19 kg Primary caustic soda (31%)
Stirring for 1200 sec
650 kg secondary water
Disinfectant: 2kg
Temperature of 32°C
400 kg secondary starch (native wheat)
Add 4.3 kg of borax
Stirring for 1100 sec
Viscosity control final: 40 sec.

The ratio NaOH/starch was 1.3% w/w.

The Lory viscosity was measured with a Lory viscosity cup (here: Elcometer 2215), which comprises a conventional cylindrical cup with a needle fixed to the bottom. The cup is first dipped into the adhesive, which then empties through an escape hole. The flow time was measured as soon as the point of the needle was visible.

Borax was added after the addition and mixing of the secondary non-swollen starch. The concentration of borax in the final formulation was 0.27%. The Lory viscosity of this starch-based adhesive according to the art including borax was decreasing readily with mixing time, at high shear.

### Preparation of a Stein-Hall starch adhesive comprising microfibrillated cellulose (in accordance with the present invention)

The process for preparing a starch-based corrugated paperboard adhesive, comprising MFC, is given below. The viscosities at different process steps were measured online by a viscometer, and controlled manually by measuring the Lory viscosity.

An adhesive in accordance with the present invention was prepared based on the following ingredients and manufactured according to the following steps:
400 kg of primary water
55 kg of primary starch (native wheat)
Stirring for 15 sec, temperature 42°C; add:
70 kg of water
12 kg Primary caustic soda (31%)
Stirring for 1200 sec
630 kg secondary water
Disinfectant: 2kg
Temperature of 32°C
400 kg secondary starch (native wheat)
20 kg of microfibrillated cellulose (Exilva PXB 01-V) - 9% dry content
Stirring for 1100 sec
Viscosity control final: 40 sec

The pH of the final adhesive was 11.9. The caustic soda concentration required was reduced by 37% compared to the reference borax adhesive. The ratio NaOH/starch was 0.8% w/w.

Unless explicitly stated otherwise, all measurements as described herein were taken at standard laboratory conditions, i.e. a temperature of 25°C, an ambient pressure of standard pressure and at an ambient humidity of 50%.

The adhesive consisted of a primary starch portion, the carrier, in which most of the granules were fully swollen, in which uncooked raw starch was suspended.

Microfibrillated cellulose was added under high speed stirring (1500 rpm), after the addition and inmix of the secondary portion of unswollen starch. Microfibrillated cellulose was easily dispersed in the mixture. The concentration of MFC (dry) in the final formulation was 0.12%. The dry mass fraction of the MFC crosslinker was 0.4% (the ratio polymer to MFC as crosslinker was 228 to 1).

Based on the presence of Microfibrillated Cellulose, the Lory viscosity of the adhesive did remain stable, and did not drop with increasing mixing time at high shear. Under alkaline conditions as present, the MFC was cross-linking the starch polysaccharide by hydrogen bonds and additionally stabilizes the mixture by forming a physical network composed of entangled fibrils, thus protecting the starch from high shear degradation, and also from further reaction by caustic soda.

The Stein-Hall starch adhesive in accordance with the present invention was tested in the production of corrugated boards HB26c (c-flute) quality, on both the single facer (SF) and the double backer (DB) sides of the boards, and the properties of the boards were compared with the borax reference board properties which were produced the same day. The corrugator settings were equal in both trials. The production speed and the gap were 205 m/min and 0.13 mm respectively, for the processes with both starch adhesives. The gel temperature of the MFC adhesive in accordance with the present invention with reduced caustic soda concentration was 56°C, whereas the gel temperature for the borax reference was 54°C. The solid contents were 26.3 and 24%, respectively.

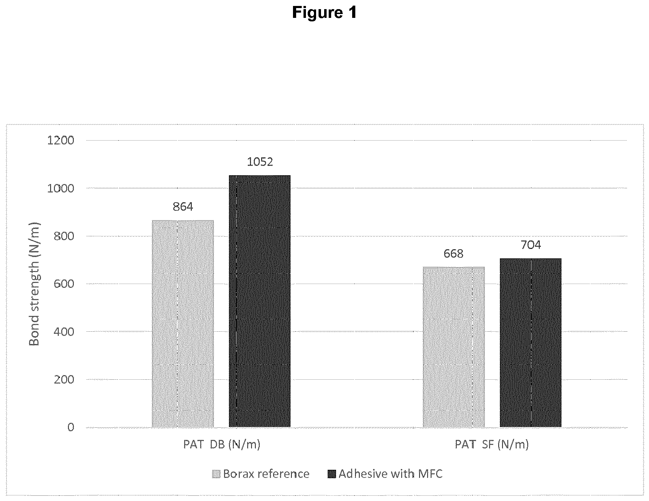

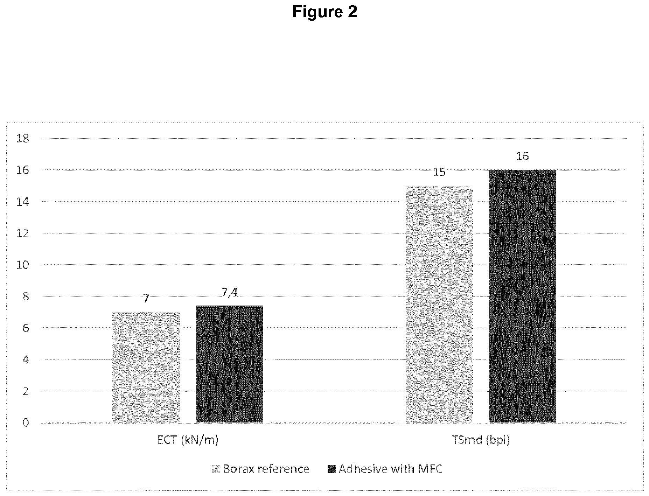

The bond strength measured with the Pin Adhesion Test (PAT) was considerably higher for the boards with the MFC starch adhesive compared to the borax reference boards, see **Figure 1****.** In fact, with MFC an increase in bond strength for the double backer of 22% was achieved, whereas an increase of 5% was measured for the single facer side of the boards (**Figure 1**). Moreover, the edgewise crush resistance (ECT) and torsional strength were somewhat higher for the boards with the MFC starch adhesive, compared to the borax reference adhesive, see **Figure 2****.** PAT and ECT were measured according to the standard references given in **Table 4.** The torsional strength / stiffness (TSmd, bpi) was measured according to GTm34024.

### Example 3:

### Adhesive stability over time: Laboratory test

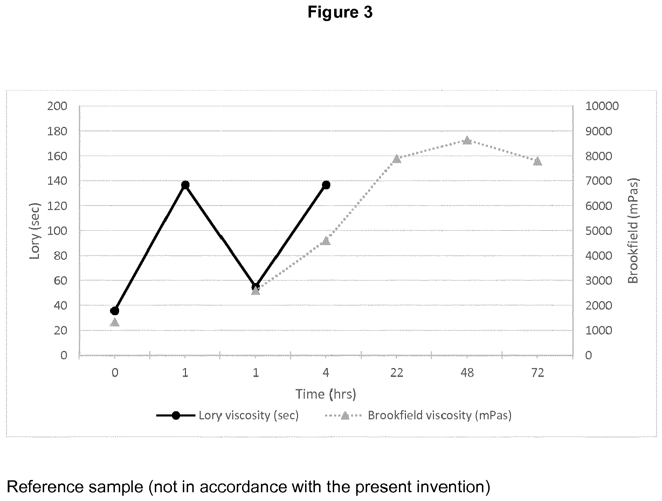

Both for a Minocar (native wheat) starch adhesive comprising 0.15% borax (reference adhesive) and the same adhesive with the addition of 0.12% MFC (adhesive in accordance with the invention), the Lory viscosity and Brookfield viscosity were measured initially, and over time under laboratory conditions, i.e. at 20°C and under standard ambient conditions. The samples were left on the bench without stirring. For the reference adhesive, the initial Lory viscosity was 36 seconds. After 1 hour, the viscosity was 137 seconds (critical viscosity), and the reference adhesive could no longer be measured by Lory viscosity without being pre-stirred for 30 seconds by a propeller mixer. After 4 hours, the viscosity of the reference adhesive was too high to be measured by Lory viscosity, even with 30 seconds pre-stirring (see **Figure 3**).

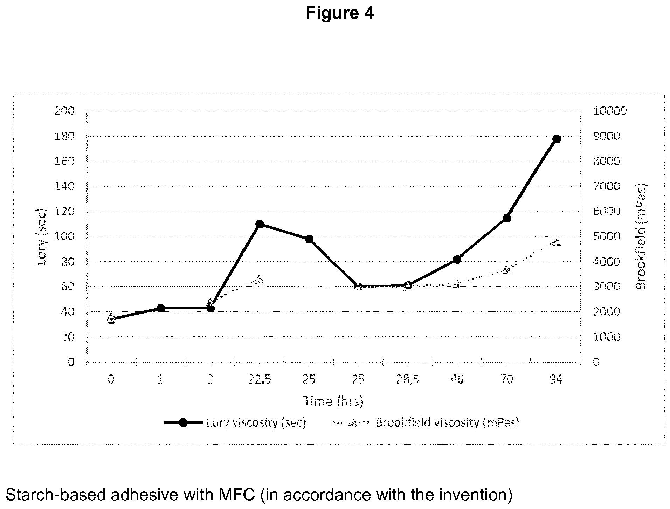

For the starch-based adhesive in accordance with the present invention, i.e. the adhesive with MFC, the initial Lory viscosity was 34 and only increased to 43 seconds 1 and 2 hours after preparation. Moreover, the Lory viscosity was still measureable 22.5 hours after preparation and the critical viscosity limit for measuring Lory viscosity was not reached before 25 hours after preparation. After 25 hours, pre-stirring with propeller mixer for 30 seconds had to be performed before the measurements. The final measurement of Lory viscosity was performed 94 hours after the adhesive was prepared (see **Figure 4**).

Brookfield viscosity measurements for the reference starch-based adhesive and the starch-based adhesive with MFC, likewise show a slower increase in viscosity over time with MFC added to the starch-based adhesive (see **Figures 3** **and** **4**). Brookfield viscosity was measured with Brookfield Viscometer - RVT model, spindle no. 4.

Overall, the viscosity measurements consistently demonstrate that the starch-based adhesive comprising microfibrillated cellulose is far more stable in regard to viscosity and over time than the reference starch-based adhesive without microfibrillated cellulose.

### Adhesive stability over time: Testing the starch based adhesive in accordance with the present invention in corrugated cardboards

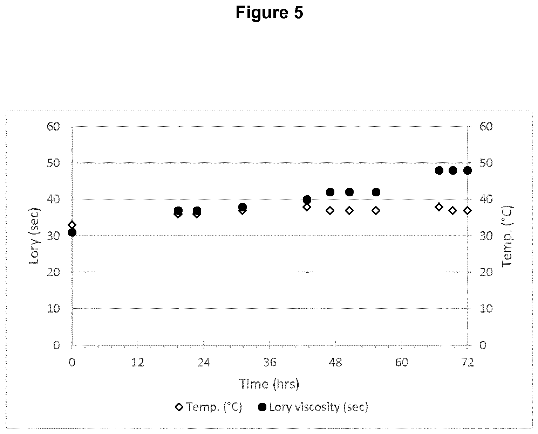

The Lory viscosity and temperature for the starch-based adhesive with MFC were also measured over time in the storage tank, see **Figure 5****.** To prevent sedimentation and reduce the viscosity of the starch-based adhesives, the glues are stirred for 5 minutes every hour. For the starch-based adhesive with MFC the sufficient time between the stirring was tested: The first 24 hours of storage, the adhesive was stirred for 5 minutes every hour, after 24-48 hours the stirring was 5 minutes every third hour, and from 48-72 hours the adhesive was stirred for 5 minutes every fourth hour. Compared to the reference starch-based adhesive, the frequency of stirring during storage was significantly reduced for the adhesive with MFC.

The Lory viscosity of the starch-based adhesive with MFC was measured to be 48 seconds after 72 hours storage in tank and the starch-based adhesive could be used directly without adjustment with water for the production of corrugated boards. The temperature of the starch-based adhesive in the tank was 37° C (see **Figure 5****).**

Both the starch-based adhesive with MFC (72 hours) and the reference starch-based adhesive (fresh) were tested on quality BB25b.

**Table 1. Standard tests**

| **Conditions** | **Grammage** | **Adhesion strength** |
|---|---|---|
| 23°C - 50RH % | g/m² | N/m |
| ISO 187 | ISO 536 | Fefco nr.11 |

As for making corrugated cardboards, a corrugator was used, which is a set of machines designed to bring together several sheets of paper to form single, double or triple wall board in a continuous process. The process starts with a paper sheet conditioned with heat and steam in order to be given its fluted shape in the single facer.

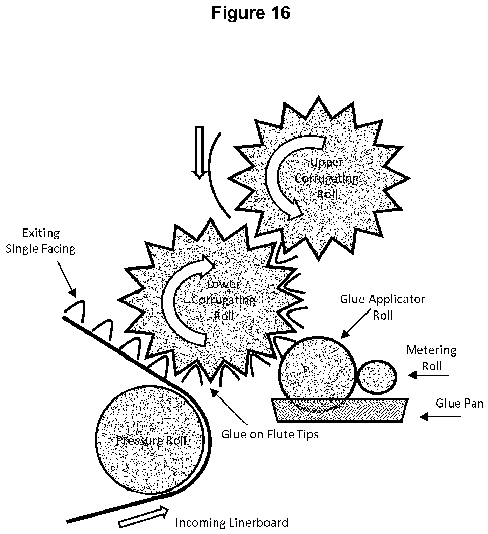

Starch-based adhesive is then applied to the tips of the flutes on one side and the inner liner is glued to the fluting (see **Figures 16** and **17** for a schematic depiction of such a process). The corrugated fluting medium with one liner attached to it (single face web) is then brought to the double backer where the outer liner is glued to the single face web.

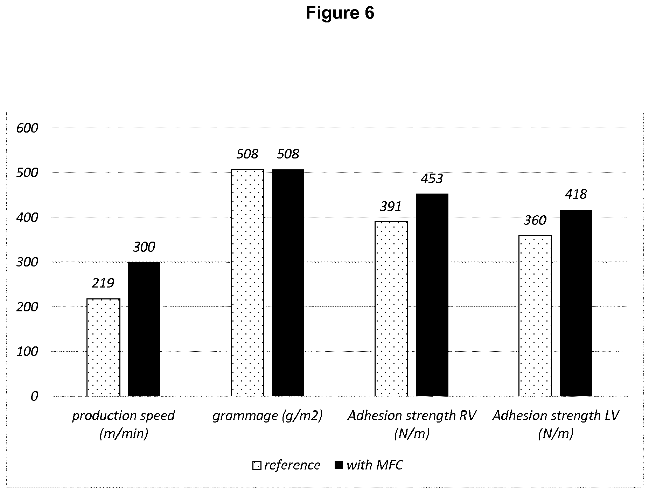

**Figure** 6 shows a comparison of the grammage and adhesion strength of corrugated boards, using the reference starch-based adhesive run at 219 m/min (left column) compared to the starch-based adhesive *with MFC* run at 300 m/min (right column, respectively).

It is noteworthy that the reference adhesive tested was a fresh glue made the same day as the corrugated boards production, while the glue with MFC was 72 hours old and was used with no addition of water.

It can be seen from **Figure 6** that the starch-based adhesive containing MFC provides greater adhesion strength to the corrugated boards (on both sides, inner and outer liner, respectively RV and LV), even when the production is run 37% faster. Since the grammage of the cardboard was similar for both adhesives, the improvement of the adhesion strength can be compared and improvements can be attributed to the better performance of the starch-based adhesive with MFC. It was also observed that the boards produced with the MFC starch-based adhesive were flatter than the boards produced with the reference starch adhesive.

Overall, the viscosity of the starch-based adhesive with MFC is unexpectedly stable over a long period of time, in particular during storage (at least 72 hours) contrary to a starch-based adhesive without MFC, the viscosity of which increases dramatically already after 1 hour.

Moreover, the starch-based adhesive with MFC is usable for corrugated board production even after 72 hours storage and performs even better than a fresh made reference at high speed production. Therefore production can be run at faster speeds, while better quality and flatter boards are obtained.

The stable viscosity of the adhesive comprising MFC also means that there is no need for additional additions of water over time, since the adhesive quality remains intact. This also means that the solid content remains unchanged and the adhesive can be formulated and kept over a long period of days, for example for over several days or weeks. This opens up the possibility of a continuous adhesive production line.

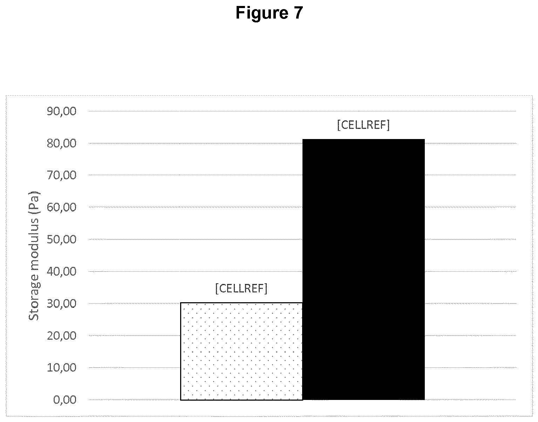

Finally, as can be seen from **Figure 7** (left column: no microfibrillated cellulose), using microfibrillated cellulose as an additive increases the storage modulus of the adhesive (measured by amplitude sweep at 25°C).

### Example 4:

### Effect of MFC on the Lory viscosity of the starch adhesive prepared according to Stein-Hall process with corn starch

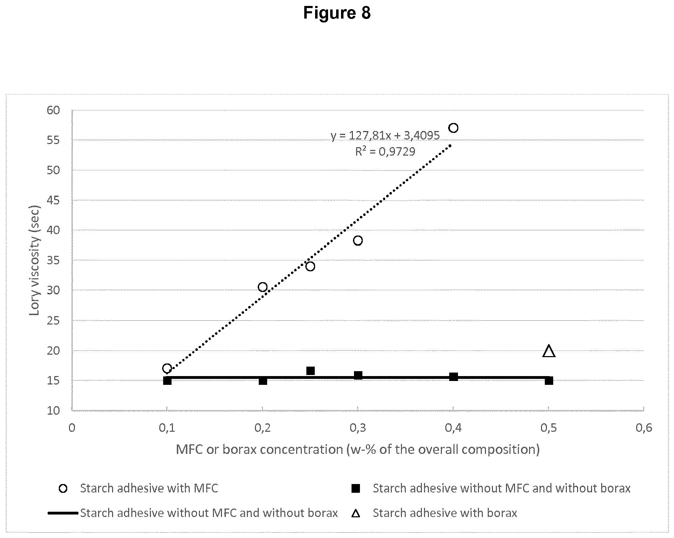

**Figure 8** shows the effect of MFC on the Lory viscosity of the starch adhesive, and how MFC is a more efficient thickener than borax. The starch adhesives were prepared according to Stein Hall process with native corn starch with equal amount of caustic soda or NaOH (0.5w-% of the overall adhesive composition) and equal solid content (25w-% of the overall adhesive composition) for all adhesives. In order to achieve the *same viscosity as the borax starch adhesive,* 72 % less dry MFC is needed.

### Effect of MFC on the gel temperature for Stein-Hall corn adhesives

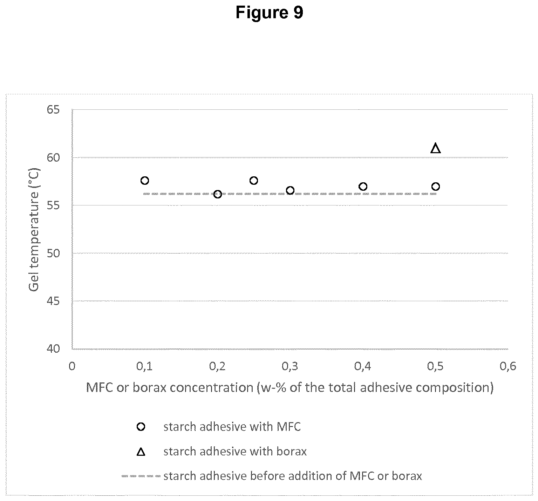

As can be seen from **Figure 9****,** adding MFC as an additive (and removing borax) stabilizes the gel temperature of the adhesive composition between 56°C and 58°C, even when varying the MFC content from 0.1% dry matter to 0.5% dry matter. The caustic soda concentration was equal for all of the adhesive compositions. The reference starch adhesive (open triangle in the Figure), with the same amount of caustic soda and 0.5% borax (but no MFC) had a gel temperature of 61 °C.

As can be seen from **Figure 9****,** varying the MFC content in this concentration range does not significantly affect the gel temperature of the starch adhesive. This is important, since in adhesive processing, the gel temperature is a key process parameter that needs to be controlled and that should not vary to any significant extent.

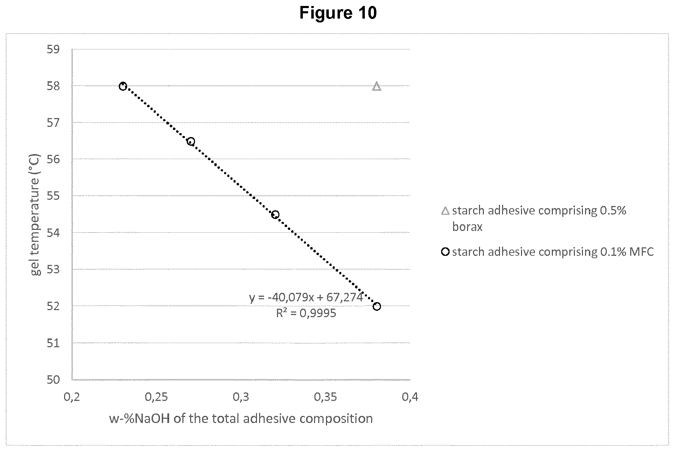

As can be seen from **Figure 10****,** for a starch adhesive comprising 0.1% MFC (and no borax), the gel temperature of the adhesive is essentially solely a function of the caustic soda (NaOH) concentration in the formulation. By using linear regression, the concentration of caustic soda providing the desired gel temperature of the adhesive can be easily calculated. The MFC in the formulation will furthermore stabilize the gel temperature of the adhesive under process and during storage.

The dependence of gel temperature on NaOH content for different types of corn and wheat starches, native and modified, comprising MFC.

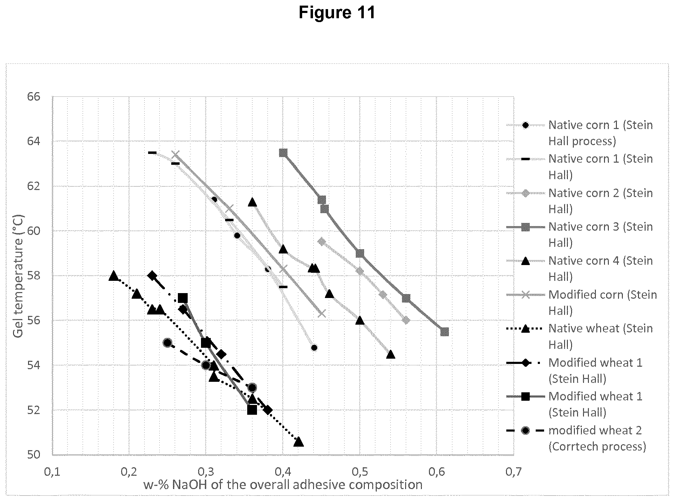

**Figure 11** shows the gel temperature of starch adhesives prepared with different kinds of starches, different solid contents and all of them comprising MFC. Figure 11 shows that no matter the process type, the recipe parameters or the nature of starch, there is always a linear relationship between the gel temperature and the caustic soda content. As a result, it is always possible to calculate the amount of caustic soda needed for the desired gel temperature, based on linear regression, when using MFC (and replacing at least some, preferably most borax) in the starch adhesive.

### Example 5:

The determination of the curing temperature of the starch adhesive with borax and the starch adhesive with MFC was performed on a rheometer (Anton Paar Physica MCR 102). A concentric cylinder geometry was used. To determine the curing temperature, a temperature sweep from 25°C to 70°C was performed in the linear viscoelastic region i.e. at a deformation of 0.1% and frequency of 1Hz. The storage modulus was measured as a function of temperature. The gel temperature was determined as the temperature of the onset of the steep increase in the storage modulus.

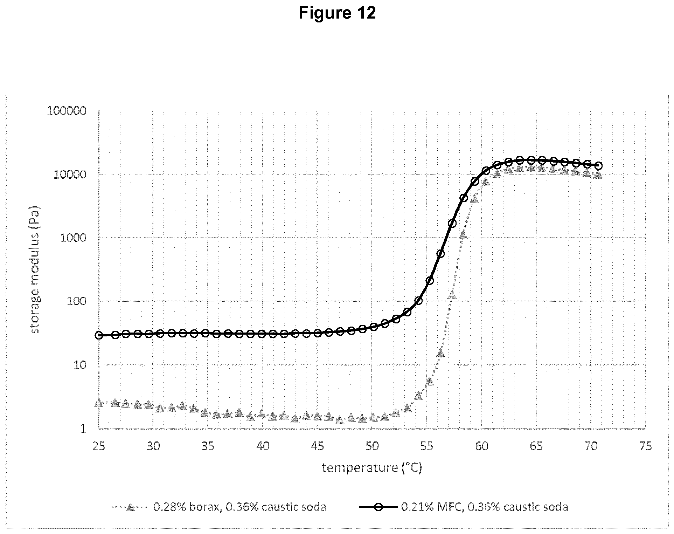

**Figure 12** shows that the adhesive containing MFC as a crosslinker has a lower curing temperature than the adhesive containing borax as a crosslinker. The caustic soda concentration as well as the solid content are equal in both glues. With MFC replacing borax, the caustic soda amount is reacting with the starch units, whereas MFC is stabilizing the starch both physically and chemically, thus stabilizing the viscosity and gel temperature of the adhesive.

It is believed that the formation of the MFC- starch gel-network is the result of strong intermolecular hydrogen bonds as well as physical entrapment of the starch molecules by entangled fibrils network.

After curing of the starch adhesives, this new gel-structure introduced by MFC was evident, when it was found that the gel is more malleable and a softer textured gel compared to the borax crosslinked starch that is a self-standing and brittle viscoelastic hydrogel once it is cooled down. A prolonged open time for adjustments of warps and water defects during the corrugating production process provided by MFC is beneficial, enhancing the quality of the corrugated boards.

**Figure 12** furthermore shows the effect of MFC on the gel temperature and the storage modulus of the starch adhesive prepared with modified wheat starch and according to Corrtech process. The gel temperature of the starch adhesive comprising 0.21% MFC of the overall adhesive composition is lower than that of the starch adhesive comprising 0.28% borax, at similar caustic soda (0.36% caustic soda of the overall adhesive composition) and starch content (28% of the overall adhesive composition). The speed of gelatinization that is illustrated by the slope of the curve is more gentle for the starch adhesive comprising MFC meaning that the latter will take slightly more time to cure compared to the starch adhesive comprising borax. The advantage is that the release of water will be slower and thus the open time longer resulting in a more controlled drying time and more stable boards.

In addition to that, the storage modulus of the cured starch adhesive comprising MFC is higher than that of the starch adhesive comprising borax, indicating that the slower release of water for the MFC-starch adhesive upon heat, may improve the gelatinization of the secondary starch, which together with the microfibrillated cellulose are providing a stronger adhesion.

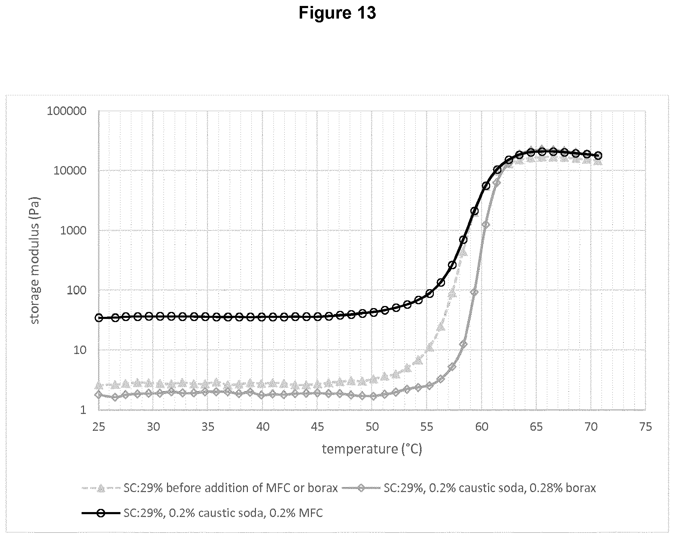

The effect of MFC was further investigated by comparing the starch adhesive comprising neither borax nor MFC with the starch adhesive comprising MFC and the starch adhesive comprising borax (**Figure 13**). The caustic soda content is the same in the starch adhesive comprising MFC and the starch adhesive comprising borax. However the caustic soda content is lower than the one used in the preparation of the adhesives presented in **Figure 12** (0.20% against 0.36% of the overall adhesive composition). This study confirms that upon application of heat, MFC somewhat prolonges the time for the gelatinization reaction of the starch adhesive, whereas borax shortens it, even at this lower caustic soda content. In addition to that, the storage modulus of the cured starch adhesive comprising MFC has increased by 27% at this lower caustic soda content. In fact **Figure 13** clearly demonstrates that MFC, unlike borax, also increases the storage modulus of the adhesive in the liquid state (before curing) and hence is building a stronger network structure compared to the borax reference adhesive.

### Example 6:

### The effect of MFC concentration on the gelatinization speed and storage modulus of the cured adhesive

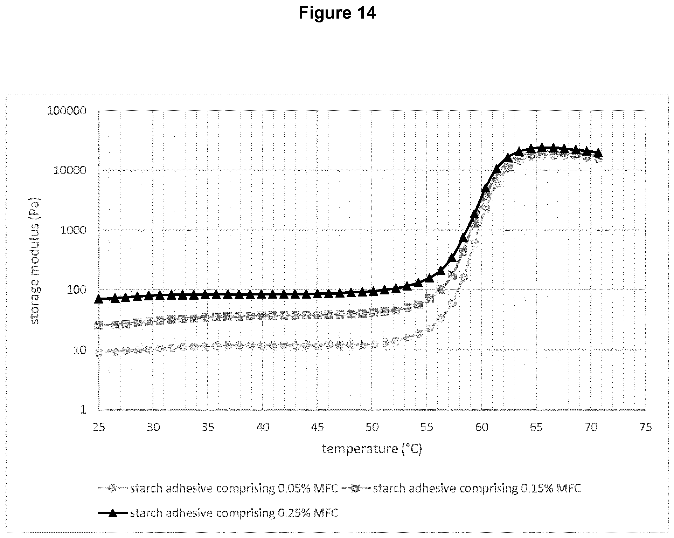

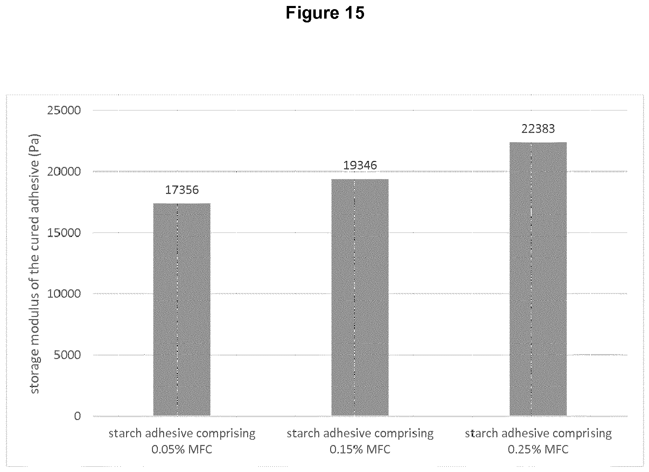

**Figure 14** and **Figure 15** show the effect of MFC concentration on the gelatinization speed of the starch adhesive, and storage modulus of the cured adhesive. Caustic soda concentration and solid content are equal for the three glues. The MFC content is varying from 0.05 to 0.25 w-% of the overall adhesive composition.

The higher the MFC concentration, the higher the storage modulus of the cured adhesive and the stronger the cured adhesive becomes (see **Figure 15**), which clearly demonstrates that the microfibrillated cellulose in concentrations up to 0.25% w/w is contributing to an increased bond strength. In addition to that, the higher the concentration of MFC, the slower the gelatinization speed and the longer the open time of the adhesive is (see **Figure 14**). The advantage of a long open time in a full scale production is that there is more time to adjust for warps on the boards which results in flatter and more stable boards. Furthermore, the longer the open time, the more time for the secondary starch to fully gelatinize, and for the formation of a strong entangled microfibrillar cellulose-starch gel network. In fact, the MFC concentration can be varied to control the bond strength of the adhesive as well as its open time, allowing for a better control of the warps and an overall better quality of the corrugated boards.

### Example 7:

### Comparison of a Minocar native wheat adhesive with MFC to the borax reference

After 24 hours of storage, the viscosity and solid content of the MFC (0.12% w/w of total formulation) starch adhesive and the borax (0.15% w/w of total formulation) reference adhesive were measured, and the values are given in **Table 2.** The caustic soda concentration was the same for both adhesives, 0.3% w/w on total formulation.

**Table 2. Properties of starch adhesives crosslinked by either borax (reference adhesive) or MFC, after 24 hours of storage. Initial viscosities were 28 and 29 sec., respectively.**

| **Sample** | **Temp. (°C)** | **Visc. (sec.)** | **Brookfield (mPa.s)** | **Txt. (B/v)** | **Solid content (%)** |
|---|---|---|---|---|---|
| Ref. adhesive with borax | 32 | 34 | 1740 | 51 | 25.5 |
| Adhesive with MFC | 33 | 29 | 1160 | 40 | 24.6 |

The starch adhesive with MFC had a stable viscosity after 24 hours storage at 37°C, and could be used as it was for cardboard production with no extra addition of water. During storage, the adhesive with MFC was stirred for 5 minutes every 4^{th} hr. In contrast, the starch adhesive with borax was less stable, and showed an increase in viscosity from 28 seconds to 34 seconds after 24 hours storage and had to be stirred for 5 minutes every hour to reduce the viscosity of the adhesive and prevent sedimentation.

Both adhesives, the starch adhesive crosslinked by MFC and the starch adhesive crosslinked by borax, were used on corrugated boards BB25c quality. Both adhesives were run with the same process parameters. For the starch-MFC adhesive the production was run at normal speed as well as high speed (see **Table 3**).

**Table 3. Overview of process parameters for running corrugated board BB25c quality.**

| **Sample** | **Layer** | **Speed m/min** |
|---|---|---|
| Ref. adhesive with borax | Single Facer (Inner Liner) | 207 |
| Adhesive with MFC | Single Facer (Inner Liner) | 207 |
| Adhesive with MFC | Single Facer (Inner Liner) | 250 |

Samples were analyzed in the laboratory according to the standard test methods given in **Table 4.**

**Table 4. Standard references.**

| **Conditions** | **Grammage** | **Thickness** | **Water absorption** | **Humidity** |
|---|---|---|---|---|
| 23°C - 50RH % | g/m² | m.m. | Cobb₆₀ - g/m² | % |
| ISO 187 | ISO 536 | ISO 3034 | ISO 535 | ISO 287 |

| **Bursting strength** | **Edge wise crush resistance** | **PAT** | **Bending resistance** | **Box compression** |
|---|---|---|---|---|
| kPa | kN/m | N/m | Md/cd - Nm | BCT - N |
| ISO 2759 | ISO 3037 | Fefco nr.11 | ISO 2493 | ISO 12048 |

The adhesive with MFC crosslinked starch gave flatter corrugated boards. The pin adhesion method (PAT) was used to measure the adhesion strength between the flutes and liners of corrugated board. In particular, the starch-MFC adhesive gave better bonding strength of the boards, both at similar and higher production speeds. (Adhesion strength of the MFC adhesive compared to the reference borax adhesive measured by pin adhesion test (PAT) on BB25c boards run at 207 and 250 m/min.).

### Example 8:

### Testing the adhesives prepared according to a Stein-Hall process on native wheat on corrugated boards

The starch adhesive crosslinked by MFC (0.13% w/w on total formulation) and the starch adhesive crosslinked by borax (reference, 0.27% w/w on total formulation), both prepared according to the Stein Hall process, were used on corrugated boards BB24b quality. The concentration of caustic soda was the same for both adhesives, 0.4% w/w on total formulation.

The adhesives were applied on the double backer (DB) side (outside of the box). The production of the corrugated boards with the reference adhesive was run at 232 m/min, whereas the production of the boards with the adhesive crosslinked by MFC was run at 250m/min (see **Table 5**). The glue gap was set to 0.08 mm for the both adhesives.

**Table 5. Overview of process parameters for running corrugated boards BB24b quality**

| **Sample** | **Layer** | **Speed m/min** |
|---|---|---|
| Ref. adhesive with borax | DB (Outer Liner) | 232 |
| Adhesive with MFC | DB (Outer Liner) | 250 |

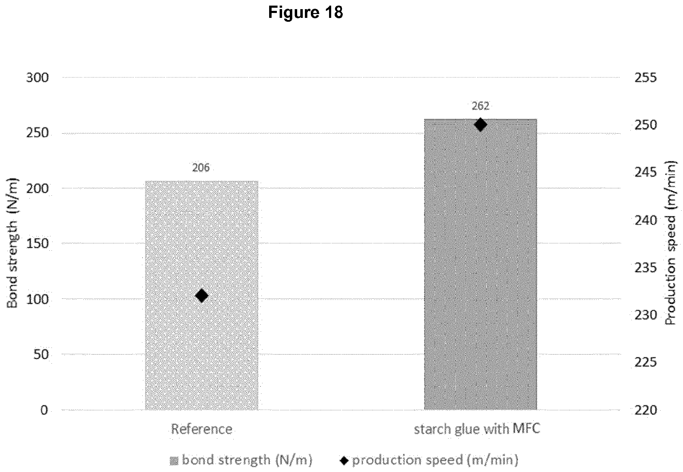

Samples were analyzed in the laboratory according to the standard test methods given in **Table 6**. The resulting values for both the reference adhesive with borax and the adhesive with MFC are shown in **Figures 18****,** **19** **and** **20****.**

**Table 6. Standard test references**

| **Conditions** | **Grammage** | **Thickness** | **PAT** |
|---|---|---|---|
| 23°C - 50RH % | g/m² | m.m. | N/m |
| ISO 187 | ISO 536 | ISO 3034 | Fefco nr.11 |

| **Humidity** | **Edge wise crush resistance (ECT)** | **Box compression** | **Bending resistance** |
|---|---|---|---|
| % | kN/m | BCT - N | Md/cd - Nm |
| ISO 287 | ISO 3037 | ISO 12048 | ISO 2493 |

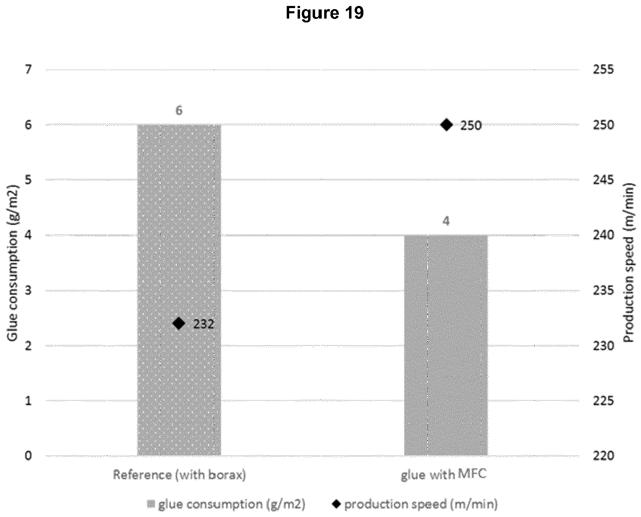

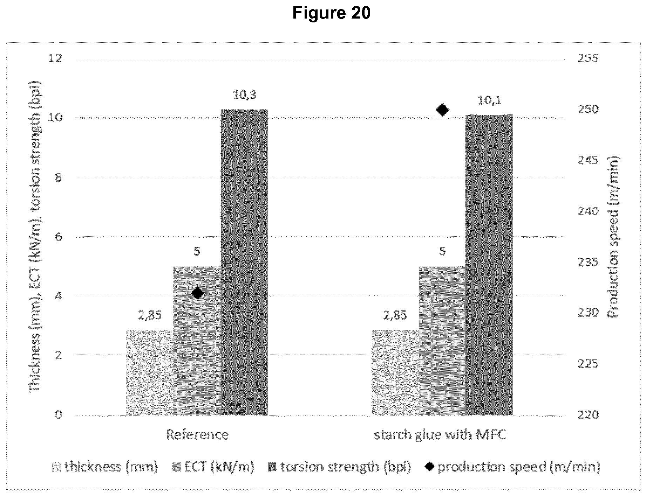

The adhesive with MFC crosslinked starch gave remarkably flatter corrugated boards. The pin adhesion method (PAT) was used to measure the adhesion strength between the flutes and liners of corrugated boards. As can be seen in **Figure 18****,** the starch-MFC adhesive gave a better bonding strength of the boards compared to the reference adhesive. In fact, at 8% higher production speed, the bond strength of the boards with the Stein-Hall adhesive with MFC is 27% greater than the bond strength of the boards with the reference adhesive. Moreover, with MFC as a crosslinking agent in the starch adhesive, the adhesive consumption was reduced with 33% (**Figure 19**), compared to the reference adhesive crosslinked with borax. The glue consumption in g/m² was calculated for 6 parallels of each sample according to the following method and equation: Weight of airdry (constant temperature and humidity conditions) corrugated board - ideal weight of the paper = difference = glue consumption. From **Figure 20****,** it can be seen that the thickness, edgewise crush resistance (ECT) and torsional strength (stiffness) were comparable for both adhesives, even if the boards with the MFC adhesive were produced at 8% higher production speed.

From this test it can be concluded that by using microfibrillated cellulose as a crosslinker in starch adhesives, less adhesive can be applied and stronger bonds are formed, as well as improved production speeds and flatter boards compared to the reference adhesive with borax.

Overall, it can be concluded that by using MFC as a cross linker in a starch-based adhesive, completely or partly replacing borax, the following advantages may be observed, either all of these advantages, or at least a sub-set thereof:
- efficient and instant thickening of the starch adhesive
- stable adhesive viscosity and gel temperature during process and storage
- allows for running corrugating process at lower temperatures
- stable quality of the adhesive during storage (no or less sedimentation)
- improved texture and a shear thinning rheological behavior which are improving the application properties of the adhesive
- higher storage modulus of the uncured (liquid) and cured (solid) starch adhesive
- increased open time of the adhesive
- improved bond strength of the corrugated boards
- higher production speed
- flatter and more stable boards from corrugator and post-process
- reduced glue consumption
- reduced water defects
- equal or better ECT and torsional strength values within specifications
- increased production capacity and/or reduced waste

## Claims

1. Adhesive composition comprising:
• at least one starch and/or at least one starch derivative, in an amount of 5% w/w to 60% w/w, of the overall adhesive composition;
• at least one solvent, said solvent preferably comprising or consisting of water, in an amount of 30% w/w to 95% w/w, of the overall adhesive composition;
• microfibrillated cellulose in an amount of 0.01% w/w to10% w/w, of the overall adhesive composition,
• alkaline, preferably alkali hydroxide, further preferably NaOH, in a total amount, that is from 0.05 % w/w to 0.8 % w/w, preferably 0.1% w/w to 0.5%, w/w further preferably from 0.1.% w/w to 0.3%, w/w, of the overall adhesive composition **and/or** in a total amount of 0.1% w/w to 2.7% w/w, preferably 0.1% w/w to 2.2% w/w, preferably 0.3% w/w to 1.5%, w/w further preferably 0.3% w/w to 1.3% w/w, as measured relative to the overall amount of starch in the overall adhesive composition.

2. Composition according to claim 1, wherein the amount of microfibrillated cellulose in said composition is from 0.02% w/w relative to the overall weight of the composition to 8% w/w, preferably from 0.05% w/w to 5% w/w, further preferably from 0.05% w/w to 2% w/w, further preferably from 0.05% w/w to 0.5% w/w, further preferably from 0.05% w/w to 0.15% w/w **and/or** wherein the amount of microfibrillated cellulose is from 0.02% w/w to 20% w/w, preferably from 0.04% w/w to 4% w/w or from 0.1% w/w to 2% w/w, further preferably 0.2% w/w to 1.4% w/w, as measured relative to the overall amount of starch in the adhesive composition.

3. Composition according to claim 1 or claim 2, wherein the overall amount of starch in said composition is from 15% w/w to 50% w/w, preferably from 25% w/w to 48% w/w or from 22 % w/w to 35 % w/w, preferably from 30% w/w to 48% w/w, further preferably from 35% w/w to 45% w/w, of the overall adhesive composition.

4. Composition according to any one of the preceding claims, wherein the at least one starch is a native starch, or a chemically or a physically modified starch, or a mixture thereof.

5. Composition according to any of the preceding claims, wherein the pH value of the adhesive composition is from 8 to 14, preferably from 10 to 13, further preferably from 11.5 to 12.5.

6. Composition according to any of the preceding claims, wherein said composition comprises no or only trace amounts of boric acid, or derivatives thereof, in particular no or only trace amounts of borax, preferably wherein taken together, said traces amount to less than 1000 ppm, preferably less than 500 ppm, further preferably less than 200 ppm, further preferably less than 100 ppm.

7. Composition according to any of the preceding claims, wherein the microfibrillated cellulose is **characterized in that** it results in gel-like dispersion that has a zero shear viscosity, η₀, of at least 3000 Pa·s, preferably of at least 4000 Pa·s or 5000 Pa·s, further preferably at least 6000 Pa·s, further preferably at least 7000 Pa·s, as measured in polyethylene glycol (PEG) as the solvent, and at a solids content of the MFC of 0.65%, wherein the measurement method is as described in the description.

8. Composition according to any of the preceding claims, wherein the microfibrillated cellulose is **characterized by** a water holding capacity, also often referred to as water retention capacity, of more than 50, preferably more than 60 or 70 or 75, further preferably more than 80 or 90, further preferably more than 100, as measured by by diluting the MFC samples to a 0.3% solids content in water, and then centrifuging the samples at 1000 G for 15 minutes, after which the clear water phase is separated from the sediment and the sediment is weighed, wherein the water holding capacity is given as (mV/mT)⁻¹ wherein mV is the weight of the wet sediment and mT is the weight of dry MFC analyzed, wherein the measurement method is as described in the description.

9. Process for preparing a starch-based adhesive, or an adhesive based on a starch derivative, which process comprises the steps of:
(a) mixing at least one starch and/or at least one starch derivative, or a mixture thereof, with at least one solvent, in particular a solvent comprising or consisting of water;
(b) optionally adding one or more additives to the mixture from (a);
(c) during or after step (a), or during or after optional step (b): adding microfibrillated cellulose, which is preferably present in a solvent, preferably a solvent comprising or essentially consisting of water;
(d) adding alkaline, preferably alkali hydroxide, further preferably NaOH, to the mixture of (a) and/or the mixture of (b) and/or the mixture of (c), in a ratio dry alkaline, preferably alkali hydroxide, further preferably NaOH, preferably in an amount relative to dry starch of from 0.1% w/w to 3% w/w, further preferably 0.5% w/w to 2% w/w;
(e) optionally adding a further amount of the at least one solvent, in particular a solvent comprising or consisting of water to the mixture of (b) and/or (c) and/or (d);
(f) optionally adding a further amount at least one starch/or at least one starch derivative, or a mixture thereof, and/or a further amount of microfibrillated cellulose to the mixture of (b), (c) and/or (d);
(g) dispersing the mixture of (c), (d), (e) or (f) until a homogeneous mixture is obtained.

10. Process according to claim 9, wherein the viscosity of the mixture increases by at least 10%, preferably at least 25%, further preferably by at least 35%, in step (c) and relative to viscosity of the mixture of step (a) or of step (b).

11. Process according to claim 9 or claim 10, wherein no or only trace amounts of boric acid, or derivatives thereof, are added in any of steps (a) through (g), in particular no or only trace amounts of borax are added, preferably wherein said traces, when taken together, amount to less than 1000 ppm, preferably less than 500 ppm, further preferably less than 200 ppm, further preferably less than 100 ppm.

12. Process according to any one of claim 9 to 11, wherein in step (a), first a primary starch is added to a predetermined amount of solvent, preferably until a predetermined viscosity is achieved, and then, in or after step (b), a secondary starch i.e. a second amount of the same or of different starch or starch derivative, is added.

13. Use of microfibrillated cellulose as a gel temperature stabilizing agent and/or as a viscosity stabilizing agent in adhesives comprising starch and/or starch derivatives.

14. Use of microfibrillated cellulose as a full or as a partial replacement for boric acid or any derivative thereof, in particular as a full or partial replacement for borax, in starch-based adhesives.

15. Use of microfibrillated cellulose as a partial or complete replacement for boric acid or any derivative thereof, in particular as a replacement for borax, in starch-based adhesives, wherein partially or completely replacing the boric acid or derivative thereof with microfibrillated cellulose increases the viscosity of the composition, vis-à-vis the otherwise same composition that comprises boric acid or a derivative thereof in the same amount as the microfibrillated cellulose, but comprises no or not as much microfibrillated cellulose.

16. Use according to claim 15, wherein (i) fully or partially replacing boric acid or derivative thereof with microfibrillated cellulose leads to a gel temperature of the overall starch adhesive that does not differ from the gel temperature of the same adhesive without either boric acid, or a derivative thereof, nor MFC, by more than 2 K, preferably not by more than 1 K,
**or** (ii) wherein fully or partially replacing the same amount of boric acid (or a derivative thereof) with the same amount of MFC lowers the gel temperature of the overall composition by at least 1 K, preferably by at least 2 K.

17. Use according to any one of claims 13 - 16, wherein at least 0.05 % w/w of boric acid or a derivative thereof, in particular of borax, relative to the overall weight of the starch based adhesive is replaced by microfibrillated cellulose, preferably at least 0.1 % w/w or 0.2 % w/w, 0.3 % w/w or 0.4 % w/w, further preferably at least 0.5 % w/w or 0.7 % w/w, further preferably at least 1 % w/w.

18. Process for making cardboard, said process comprising at least the following steps:
providing a starch-based adhesive composition according to any one of claims 1 - 8, **or**
providing the following starch-based adhesive composition:
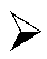 at least one starch and/or at least one starch derivative, in an amount of 5% w/w to 60% w/w, of the overall adhesive composition;
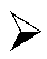 at least one solvent, said solvent preferably comprising or consisting of water, in an amount of 30% w/w to 95% w/w of the overall adhesive composition;
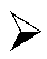 microfibrillated cellulose in an amount of 0.01% w/w to 10% w/w of the overall adhesive composition, and
applying said starch-based adhesives to at least a part of the tips of the flutes of a corrugated piece of paper, on at least one side, preferably on both sides; and
in a corrugator, applying at least one liner onto said corrugated piece of paper,
preferably applying a further liner on the other side of the corrugated piece of paper, and
preparing a single, double, triple or further multiple wall cardboard, preferably in a continuous process.

19. Corrugated paperboards or cardboards having at least one flute and at least one liner comprising the starch-based adhesive composition according to any one of claims 1 to 8, **or** comprising the following starch-based adhesive composition:
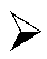 at least one starch and/or at least one starch derivative, in an amount of 5% w/w to 60% w/w of the overall adhesive composition;
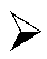 at least one solvent, said solvent preferably comprising or consisting of water, in an amount of 30% w/w to 95% w/w of the overall adhesive composition;
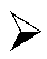 microfibrillated cellulose in an amount of 0.01% w/w to 10% w/w, of the overall adhesive composition.

20. Use of the starch-based adhesive composition of any of claims 1 - 8 **or** use of the following compostion:
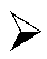 at least one starch and/or at least one starch derivative, in an amount of 5% w/w to 60% w/w of the overall adhesive composition;
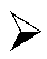 at least one solvent, said solvent preferably comprising or consisting of water, in an amount of 30% w/w to 95% w/w of the overall adhesive composition;
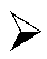 microfibrillated cellulose in an amount of 0.01% w/w to 10% w/w of the overall adhesive composition,
in the manufacture of corrugated paperboards or cardboards.

21. Process or use or cardboard according to any one of claims 9 - 20, wherein the amount of microfibrillated cellulose in said composition is from 0.01% w/w, relative to the overall weight of the composition to 10% w/w, preferably from 0.02% w/w to 8% w/w, further preferably from 0.05% w/w to 5% w/w, further preferably from 0.05 w/w % to 2% w/w, further preferably from 0.05% w/w to 0.5%, further preferably from 0.05% w/w to 0.15% w/w, **and/or** the amount of microfibrillated cellulose is from 0.02% w/w to 20% w/w, preferably 0.04% w/w to 4% w/w, preferably 0.1% w/w to 2% w/w, further preferably 0.2% w/w to 1.4% w/w, as measured relative to the overall amount of starch in the adhesive composition.
